# FASCICULE DE BREVET EUROPEEN

(11) **EP 1 267 646 B1**
(45) Date de publication et mention de la délivrance du brevet: **01.02.2006**
(21) Numéro de dépôt: 01921472.5
(22) Date de dépôt: 04.04.2001
(51) Int. Cl.: A23N 1/00, B30B 9/06, B30B 15/06

(54) **PRESSOIR**
PRESSE
WINE PRESS

(30) Priorité: 04.04.2000 FR 0004275
(43) Date de publication de la demande: 02.01.2003
(73) Titulaire: Les Pressoirs Coquard, 51100 Reims (FR)
(72) Inventeur: MASSET, Jean-Pierre, F-51100 Reims (FR)
(74) Mandataire: Rhein, Alain
(86) Numéro de dépôt international: PCT/FR2001/001008
(87) Numéro de publication internationale: WO 2001/074182

(56) Documents cités:
- DE-B- 1 247 002
- FR-A- 2 533 940
- FR-A- 2 701 816

## Description

La présente invention a pour objet un pressoir, utilisable notamment, mais non exclusivement, pour le pressurage du raisin destiné à l'élaboration du vin de champagne.

Le pressurage de la vendange est généralement réalisé en plusieurs cycles de mise sous pression du raisin, chaque cycle étant suivi d'une opération d'émiettage, ou retrousse, du marc à l'intérieur du pressoir.

A titre d'exemple, dans le domaine particulier de l'élaboration du vin de champagne, le pressurage comprend une première étape de montée en pression lente permettant d'obtenir la cuvée qui représente une quantité de 20,5 hl pour 4000 Kg de raisin, puis, après une retrousse, une deuxième opération constituée d'une ou de plusieurs pressions plus importantes suivies chacune d'une retrousse, et qui donne la taille représentant 5 hl toujours pour 4000 KG de raisin.

Les pressoirs sont traditionnellement verticaux, ils sont toutefois progressivement remplacés par les pressoirs horizontaux.

Les pressoirs verticaux comportent un réceptacle dans lequel est placée la vendange, et un moyen de pression actionné verticalement, par l'intermédiaire d'une vis ou d'un vérin, apte à venir comprimer la vendange dans ledit réceptacle. Dans ces pressoirs verticaux, la retrousse est réalisée manuellement au moyen de bêches et de fourches.

Les pressoirs horizontaux sont essentiellement de deux types, à membrane ou à pistons. Ils comportent une cage cylindrique destinée à recevoir la vendange, où agit soit une membrane gonflable disposée axialement et apte à comprimer la vendange contre la paroi de ladite cage, soit un plateau circulaire ou rectangulaire mobile en translation axiale apte à venir écraser la vendange contre une paroi, ou deux plateaux circulaires ou rectangulaires mobiles en déplacement l'un vers l'autre. Sur ces pressoirs, la retrousse du gâteau de marc est réalisée par rotation de la cage après retrait des moyens de pression, c'est-à-dire dégonflement de la membrane ou recul du ou des plateaux.

Les pressoirs horizontaux ont été mis en oeuvre pour faciliter les opérations de retrousse et de vidange, et limiter les interventions manuelles, ils présentent toutefois des inconvénients lors de la réalisation de ces opérations.

En effet, la pression exercée lors du pressurage est telle que le marc peut, malgré le mouvement de la cage, rester aggloméré contre la paroi de celle-ci, en sorte que les retrousses et la vidange du marc nécessitent tout de même des interventions manuelles.

On notera qu'il existe aussi des pressoir horizontaux dits discontinus, tels que celui décrit dans le document FR 2 701 816, toutefois ces pressoirs ne permettent pas de réaliser un pressurage de la vendange en plusieurs cycles de mise sous pression du raisin, à des pressions allant en croissant, où chaque cycle est suivi d'une opération retrousse du marc à l'intérieur du pressoir.

La présente invention a pour but de proposer un pressoir permettant de remédier à ces divers inconvénients, et qui présente en outre l'avantage d'un nettoiement plus aisé.

Le pressoir objet de la présente invention est du type horizontal comportant un fond ajouré et des moyens de pression consistant en deux plateaux mobiles plateau en déplacement axial l'un vers l'autre, ou en un plateau mobile et une paroi fixe, et il se caractérise essentiellement en ce que les moyens de pression présentent une configuration apte, lors du pressurage, à conformer le gâteau de marc en un bloc tel qu'au moins une portion de celui-ci se retrouve en porte-à-faux lors du seul retrait de l'un au moins desdits moyens de pression, en sorte que ladite portion soit susceptible de s'effondrer dans l'enceinte du pressoir.

Après retrait du ou des moyens de pression, la portion en porte-à-faux du gâteau de marc s'effondre et s'aère avant l'opération de pression suivante.

Selon une caractéristique additionnelle du pressoir selon l'invention, la paroi de l'un des moyens de pression, destinée à venir au contact de la vendange, présente à sa base, ou à proximité de celle-ci, un profil convexe apte à créer dans le gâteau de marc au moins un renfoncement qui crée, lors du retrait dudit moyen de pression, une cavité susceptible de saper la base dudit gâteau de marc et de provoquer l'effondrement de celui-ci.

Selon un mode de réalisation particulier du pressoir selon l'invention, la paroi de l'un des moyens de pression, destinée à venir au contact de la vendange, présente au moins une partie inclinée en direction des moyens de déplacement dudit moyen de pression, tandis que la paroi de l'autre moyen de pression, destinée à venir au contact de la vendange, présente, en regard de ladite partie, au moins une partie de profil complémentaire ou sensiblement complémentaire.

Les parois des moyens de pression peuvent présenter plusieurs parties permettant de scinder le bloc de marc formé après pressurage, en plusieurs portions, en sorte qu'au moins l'une d'elles s'effondre après retrait de l'un au moins des moyens de pression.

On peut ainsi concevoir des moyens de pression permettant de conformer le marc en un bloc présentant deux portions superposées, décalées par rapport à un plan vertical, et reliées par une portion inclinée, le retrait d'au moins l'un des moyens de pression entraînant la rupture de la portion inclinée et donc l'effondrement de la portion supérieure du bloc.

Selon une caractéristique additionnelle du mode de réalisation particulier du pressoir selon l'invention, la paroi du moyen de pression qui présente au moins une partie inclinée en direction des moyens de déplacement dudit moyen de pression, comporte à sa base ou à proximité de celle-ci, au moins une proéminence transversale.

Selon une caractéristique additionnelle du pressoir selon l'invention, le ou les moyens de pression présentent une configuration apte, lors de la reprise de la pression après effondrement de la portion en porte-à-faux du bloc de marc, à créer des turbulences permettant de faire remonter dans l'enceinte du pressoir, au moins partiellement la portion non effondrée dudit bloc, sous l'action d'une poussée sur la portion effondrée de celui-ci.

Selon un mode de réalisation particulier du pressoir selon l'invention, la paroi du moyen de pression disposé du côté opposé auquel s'effondre la portion en porte-à-faux du bloc de marc, présente inférieurement une partie transversale incurvée concave.

Selon une caractéristique additionnelle du mode de réalisation particulier du pressoir selon l'invention, la partie transversale incurvée concave de la paroi est de section constante en forme d'arc de cercle, tandis que la partie de ladite paroi placée immédiatement au-dessus est tangente à ladite partie transversale incurvée concave.

Selon une autre caractéristique additionnelle du mode de réalisation particulier du pressoir selon l'invention la paroi, destinée à venir au contact de la vendange, du moyen de pression du côté duquel doit s'effondrer la portion en porte-à-faux du bloc de marc, présente, en regard de la partie transversale incurvée concave de la paroi de l'autre moyen de pression, une partie basse sensiblement verticale.

Selon une caractéristique additionnelle du pressoir selon l'invention, la paroi de l'un au moins des moyens de pression est ajourée pour permettre l'écoulement du moût lors d'une opération de pressurage.

Les avantages et les caractéristiques du dispositif selon l'invention, ressortiront plus clairement de la description qui suit et qui se rapporte au dessin annexé, lequel en représente un mode de réalisation non limitatif.

### Dans le dessin annexé :

La figure 1 représente une vue simplifiée en coupe selon un plan vertical longitudinal d'un pressoir selon l'invention.

Les figures 2a, 2b, 2c, 2d, 2e et 2f représentent chacune une vue schématique en coupe longitudinale selon un plan vertical d'une phase de pressurage dans un pressoir selon l'invention.

La figure 3 représente une vue schématique partielle en coupe d'une variante du même pressoir.

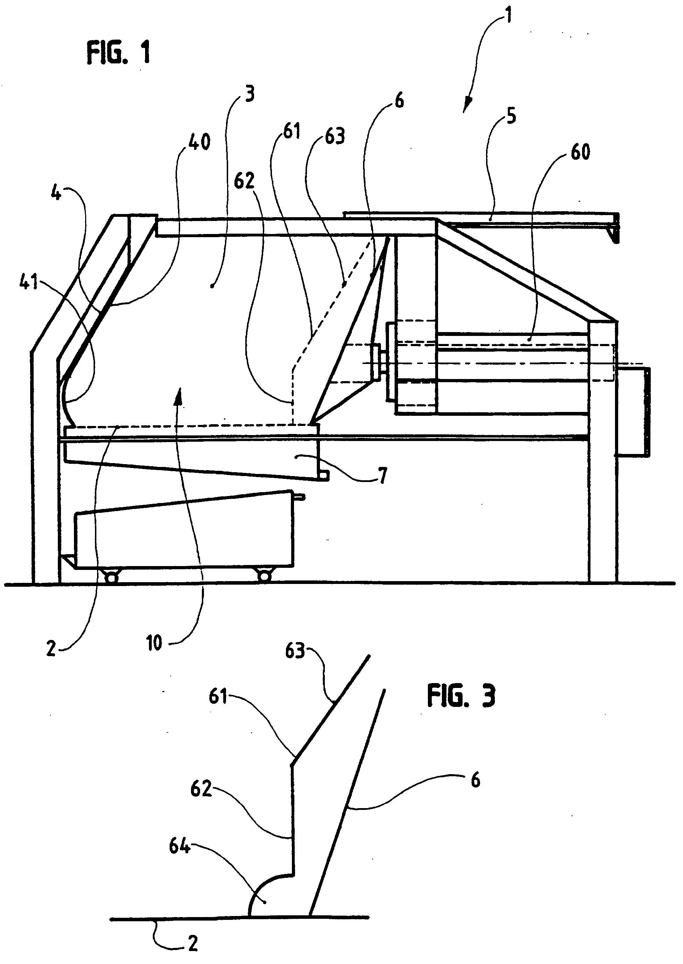

En référence à la figure 1, on peut voir qu'un pressoir 1 selon l'invention comporte une enceinte 10 délimitée par un fond constitué d'une maie filtrante 2, escamotable par l'intermédiaire de moyens appropriés de type connu, non représentés, deux parois latérales 3 dont une seule est visible, une paroi transversale 4, un couvercle amovible 5, et un plateau mobile 6 apte à ce déplacer entre les parois 3 en direction de la paroi transversale 4 sous l'action de moyens de poussée en l'occurrence un vérin hydraulique 60.

On notera que dans ce mode de réalisation, seul le plateau 6 est mobile, il est cependant parfaitement possible de concevoir un mode de réalisation où la paroi 4 est également mobile, sans pour autant sortir du cadre de l'invention.

Le plateau mobile 6 présente du côté de l'enceinte 10 une paroi 61 divisée dans le sens vertical en deux parties, une partie inférieure 62 verticale et une partie supérieure 63 inclinée vers l'arrière, c'est-à-dire du côté du vérin 60.

Dans ce mode de réalisation la partie supérieure inclinée 63 est d'une hauteur sensiblement double de celle de la paroi inférieure verticale 62.

On notera que la paroi 61 est ajourée de manière à permettre l'écoulement du moût, lequel se déverse à l'intérieur du plateau 6 qui est creux, pour finalement traverser la maie filtrante 2 et être recueilli par un élément collecteur 7.

La paroi transversale 4 présente un profil sensiblement complémentaire de celui du plateau mobile 6, elle comporte ainsi une partie supérieure 40 parallèle à la partie 63, et, en regard de la partie inférieure 62, une partie inférieure 41 de profil concave. La partie inférieure 41 est ainsi de section transversale en arc de cercle, auquel la partie supérieure 40 est tangente.

On notera toutefois que dans une variante, non représentée, les parois 40 et 63 ne sont pas parallèles, mais s'évasent légèrement vers le haut, ce qui favorise l'effondrement du gâteau de marc.

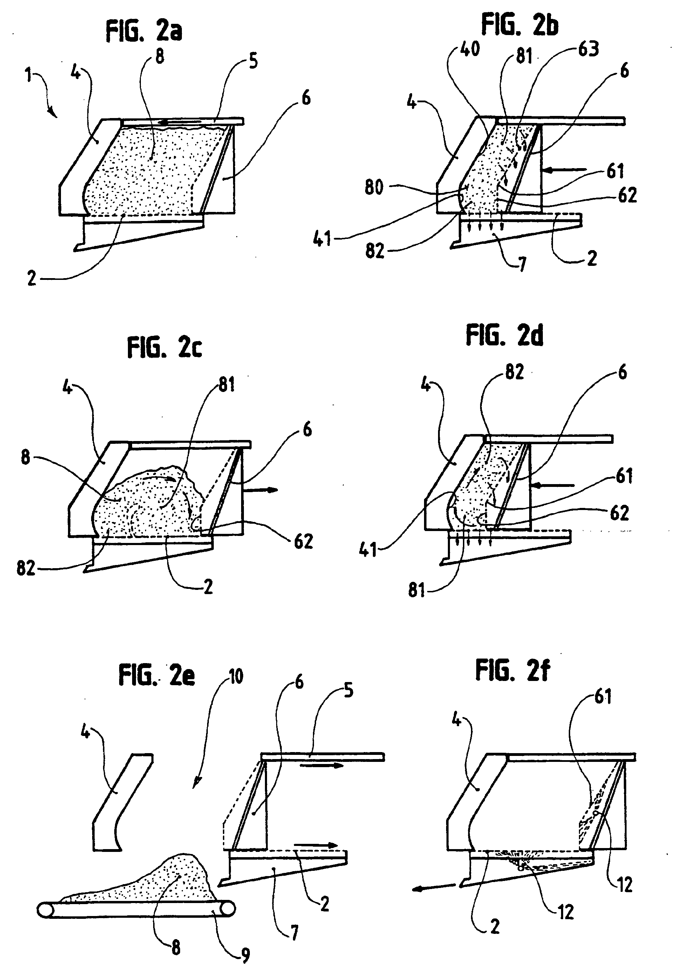

En référence maintenant aux figures 2a, 2b, 2c, 2d, 2e et 2f, on peut voir différentes étapes du fonctionnement du pressoir selon l'invention.

Sur la figure 2a, la vendange 8 est placée dans l'enceinte 10 du pressoir 1, tandis que celle-ci est fermée par le couvercle 5.

Sur la figure 2b, sous l'action des moyens de poussée, non représentés, le plateau 6 presse la vendange 8 contre la paroi 4, et le moût s'écoule par la maie filtrante 2 et la paroi 61, pour être recueilli et dirigé vers une cuve, non représentée.
On peut voir que sous l'action du pressurage et du fait des profils des parois 4 et 61, le marc 8 prend la forme d'un bloc 80 qui, dans ce mode de réalisation du pressoir 1, comprend une portion supérieure 81 issue du rapprochement de la partie 63 de la partie 40 et qui est en porte-à-faux par rapport à une portion inférieure 82 issue du rapprochement de la partie 62 de la partie 41.

Sur la figure 2c, où on peut voir le commencement de l'opération de retrousse, le plateau 6 est ramené en arrière, ce qui provoque l'effondrement de la portion supérieure 81, du fait de sa position en porte-à-faux. La portion 81 tombe sur la maie filtrante 2 en avant du plateau 6, entre la portion inférieure 82 et la partie verticale 62 du plateau 6.

Sur la figure 2d, le plateau 6 est actionné en déplacement vers l'avant pour reprendre le pressurage, et, par la poussée de la partie verticale 62 de la paroi 61 sur la portion effondrée 81, et du fait de la forme concave 41, la portion 82 est poussée vers le haut, ce qui achève l'opération de retrousse, laquelle est ainsi réalisée automatiquement sans intervention manuelle.

Après achèvement du pressurage, le marc est évacué comme cela est représenté sur la figure 2e, où après recul du plateau 6 et ouverture du couvercle 5, la maie filtrante 2 est escamotée tandis qu'un moyen d'évacuation, en l'occurrence une bande transporteuse 9, recueille le marc qui s'échappe de l'enceinte 10.

Après déchargement complet du marc, le pressoir 1 est lavé, notamment, comme cela est représenté sur la figure 2f, le dessous de la maie filtrante 2 et l'intérieur du plateau 6 en arrière de la paroi ajourée 61, ce qui est réalisé par l'intermédiaire de buses d'aspersion 11.

En référence à la figure 3 on peut voir que selon une variante, la paroi 61 du plateau mobile 6, présente à la base de sa partie inférieure 62, une proéminence 64 de section en quart de rond, qui s'étend transversalement, et qui est destinée à accentuer le porte-à-faux, et notamment à saper la base du gâteau de marc.

## Revendications

1. Pressoir utilisable notamment, mais non exclusivement, pour le pressurage du raisin destiné à l'élaboration du vin de champagne, pour réaliser un pressurage de la vendange en plusieurs cycles de mise sous pression du raisin, où chaque cycle est suivi d'une opération d'émiettage, ou retrousse, du marc à l'intérieur du pressoir, ledit pressoir étant du type horizontal comportant un fond ajouré (2) et des moyens de pression (4, 6) consistant en deux plateaux mobiles plateau en déplacement axial l'un vers l'autre, ou en un plateau mobile et une paroi fixe, **caractérisé en ce que** les moyens (4, 6) de pression présentent une configuration apte, lors du pressurage, à conformer le gâteau de marc (8) en un bloc (80) tel qu'au moins une portion (81) de celui-ci se retrouve en porte-à-faux lors du seul retrait de l'un au moins desdits moyens de pression (4, 6), en sorte que ladite portion (81) soit susceptible de s'effondrer dans l'enceinte (10) du pressoir (1) sur ledit fond ajouré (2).

2. Pressoir selon la revendication 1, **caractérisé en ce que** la paroi de l'un des moyens de pression, destinée à venir au contact de la vendange, présente à sa base, ou à proximité de celle-ci, un profil convexe apte à créer dans le gâteau de marc au moins un renfoncement qui crée, lors du retrait dudit moyen de pression, une cavité susceptible de saper la base dudit gâteau de marc et de provoquer l'effondrement de celui-ci.

3. Pressoir selon la revendication 1 ou la revendication 2, **caractérisé en ce que** la paroi (61) de l'un (6) des moyens de pression, destinée à venir au contact de la vendange (8), présente au moins une partie (63) inclinée en direction des moyens (60) de déplacement dudit moyen de pression (6), tandis que la paroi (4) de l'autre moyen de pression, destinée à venir au contact de la vendange (8), présente, en regard de ladite partie (63) inclinée, au moins une partie (40) de profil complémentaire ou sensiblement complémentaire.

4. Pressoir selon la revendication 3, **caractérisé en ce que** la paroi (61) du moyen de pression (6) qui présente au moins une partie (63) inclinée en direction des moyens (60) de déplacement dudit moyen de pression (6), comporte à sa base ou à proximité de celle-ci, au moins une proéminence transversale (64).

5. Pressoir selon l'une quelconque des revendications précédentes, **caractérisé en ce que** le ou les moyens de pression (4, 6) présentent une configuration apte, lors de la reprise de la pression après effondrement de la portion (81) en porte-à-faux du bloc de marc (80), à créer des turbulences permettant de faire remonter dans l'enceinte (10) du pressoir (1), au moins partiellement la portion non effondrée (82) dudit bloc (80), sous l'action d'une poussée sur la portion effondrée (81) de celui-ci.

6. Pressoir selon la revendication 5, **caractérisé en ce que** la paroi (4) du moyen de pression disposée du côté opposé auquel s'effondre la portion (81) en porte-à-faux du bloc de marc (80), présente inférieurement une partie transversale incurvée concave (41).

7. Pressoir selon la revendication 6, **caractérisé en ce que** la partie transversale incurvée concave (41) de la paroi (4) est de section constante en forme d'arc de cercle, tandis que la partie (40) de ladite paroi (4) positionnée immédiatement au-dessus est tangente à ladite partie (41) transversale incurvée concave.

8. Pressoir selon la revendication 6 ou la revendication 7, **caractérisé en ce que** la paroi (61), destinée à venir au contact de la vendange, du moyen de pression (6) du côté duquel doit s'effondrer la portion (81) en porte-à-faux du bloc de marc (80), présente, en regard de la partie transversale incurvée concave (41) de la paroi (4) de l'autre moyen de pression, une partie basse (62) sensiblement verticale.

9. Pressoir selon l'une quelconque des revendications précédentes, **caractérisé en ce que** la paroi (61) de l'un (6) au moins des moyens de pression est ajourée pour permettre l'écoulement du moût lors d'une opération de pressurage.

## Claims

1. Wine press for use in particular, but not exclusively, for pressing grapes for producing champagne, for carrying out a pressing of the grapes in several cycles of putting under pressure of the grapes, where each cycle is followed by an operation of crumbling, or breaking-up, the marc inside the wine press, said wine press being of the horizontal type including an open-work bottom (2) and pressing means (4, 6) consisting of two trays moving axially towards each other, or of one movable tray and one fixed wall, **characterised in that** the pressing means (4, 6) have a configuration capable, during pressing, of shaping the mare cake (8) into a block (80) so that at least one portion (81) of it is cantilevered during the simple removal of one at least of said pressing means (4, 6), so that said portion (81) is likely to collapse into the chamber (10) of the wine press (1) onto said open-work bottom (2).

2. Wine press according to claim 1, **characterised in that** the wall of one pressing means, aimed at entering into contact with the grapes, has, at its base or in the vicinity of the latter, a convex profile capable of creating in the marc cake at least one recess that, during the removal of said pressing means, creates a cavity that can undermine the base of said marc cake and cause it to collapse.

3. Wine press according to claim 1 or claim 2, **characterised in that** the wall (61) of one pressing means (6), aimed at entering into contact with the grapes (8), has at least a portion (63) inclined towards the means (60) for moving said pressing means (6), while the wall (4) of the other pressing means, aimed at entering into contact with the grapes (8), has, in front of said inclined portion (63), at least a portion (40) with a complementary or substantially complementary profile.

4. Wine press according to claim 3, **characterised in that** the wall (61) of the pressing means (6) having at least one portion (63) inclined towards the means (60) for moving said pressing means (6) includes, at its base or in the vicinity of the latter, at least one transverse prominence (64).

5. Wine press according to any of the preceding claims, **characterised in that** the pressing means (4, 6) have a configuration that is capable, when resuming the pressing after the collapse of the cantilevered portion (81) of the marc block (80), of creating turbulences allowing causing the non-collapsed portion (82) of said block (80) to raise within the chamber (10) of the wine press (1), at least partially, under the action of a thrust exerted on its collapsed portion (81).

6. Wine press according to claim 6, **characterised in that** the wall (4) of the pressing means arranged on the side opposite the one where the cantilevered portion (81) of the marc bloc (80) collapses has, at its lower side, a concave curved transverse portion (41).

7. Wine press according to claim 6, **characterised in that** the concave curved transverse portion (41) of the wall (4) has a constant cross-section having the shape of an arch of a circle, while the portion (40) of said wall (4) positioned immediately above is tangent to said concave curved transversal portion (41).

8. Wine press according to claim 6 or claim 7, **characterised in that** the wall (61), aimed at entering into contact with the grapes, of the pressing means (6) on the side where the cantilevered portion (81) of the marc bloc (80) should collapse has, in front of the concave curved transverse portion (41) of the wall (4) of the other pressing means, a substantially vertical lower portion (62).

9. Wine press according to any of the preceding claims, **characterised in that** the wall (61) of at least one (6) of the pressing means is perforated, in order to allow the must to flow out during a pressing operation.

## Patentansprüche

1. Presse, brauchbar insbesondere, aber nicht ausschließlich, für das Auspressen von Traube, die für die Herstellung von Schaumwein der Art Champagner bestimmt ist, um ein Auspressen der Weinlese in mehreren Zyklen zum Keltern der Traube auszuführen, wobei jeder Zyklus von einem Vorgang zum Zerbröckeln oder zur Umstülpung der Treber im Innern der Presse gefolgt ist, seiend die besagte Presse der Art horizontal, umfassend einen durchlöcherten Boden (2) und Preßmittel (4, 6), bestehend aus zwei beweglichen Scheiben, die sich axial hinsichtlich einander bewegen, oder aus einer beweglichen Scheibe und einer festen Wand, **dadurch gekennzeichnet, daß** die Preßmittel (4, 6) eine Konfiguration aufweisen, die geeignet ist, um bei dem Auspressen den Treberkuchen (8) zu einem Block (80) zu formen, so daß sich wenigstens eine Portion (81) desselben überhängend bei der einfachen Zurückziehung wenigstens des einen von den besagten Preßmitteln (4, 6) befindet, derart, daß die besagte Portion (81) geeignet sei, um in den Bereich (10) der Presse (1) auf dem besagten, durchlöcherten Boden (2) zu stürzen.

2. Presse nach Anspruch 1, **dadurch gekennzeichnet, daß** die Wand des einen von den Preßmitteln, vorgesehen, um mit der Weinlese in Berührung zu kommen, an ihrer Basis oder nahe bei dieser ein gewölbtes Profil aufweist, das geeignet ist, um im Treberkuchen wenigstens eine Vertiefung zu schaffen, die bei der Zurückziehung des besagten Preßmittels einen Hohlraum schafft, geeignet, um die Basis des besagten Treberkuchens zu untergraben und den Zusammensturz desselben zu verursachen.

3. Presse nach Anspruch 1 oder Anspruch 2, **dadurch gekennzeichnet, daß** die Wand (61) des einen (6) von den Preßmitteln, vorgesehen, um mit der Weinlese (8) in Berührung zu kommen, wenigstens einen Teil (63) aufweist, der in Richtung der Mittel (60) zur Bewegung des besagten Preßmittels (6) geneigt ist, während die Wand (4) des anderen Preßmittels, vorgesehen, um mit der Weinlese (8) in Berührung zu kommen, gegenüber dem besagten geneigten Teil (63) wenigstens einen Teil (40) mit ergänzendem oder im wesentlichen ergänzendern Profil aufweist.

4. Presse nach Anspruch 3, **dadurch gekennzeichnet, daß** die Wand (61) des Preßmittels (6), das wenigstens einen Teil (63), der in Richtung der Mittel (30) zur Bewegung des Preßmittels (6) geneigt ist, aufweist, an ihrer Basis oder nahe bei dieser wenigstens einen Quervorsprung (64) umfaßt.

5. Presse nach irgendeinem der vorgehenden Ansprüche, **dadurch gekennzeichnet, daß** das oder die Preßmittel (4, 6) eine Konfiguration aufweisen, geeignet, um bei der Wiederaufnahme des Auspressens nach dem Zusammensturz der überhängenden Portion (81) des Kuchenblocks (80) Turbulenzen zu schaffen, die erlauben, in den Bereich (10) der Presse (1) wenigstens teilweise die nicht niedergestürzte Portion (82) des besagten Blocks (30) unter der Einwirkung eines Drucks auf die niedergestürzte Portion (81) desselben hinaufgehen zu lassen.

6. Presse nach Anspruch 5, **dadurch gekennzeichnet, daß** die Wand (4) des Preßmittels, das auf der Seite angeordnet ist, die jener entgegengesetzt ist, auf der die überhängende Portion (81) des Kuchenblocks (80) stürzt, innerlich einen hohlen, nach innen gebogenen senkrechten Teil (41) aufweist.

7. Presse nach Anspruch 6, **dadurch gekennzeichnet, daß** der hohle, nach innen gebogene Querteil (41) der Wand (4) einen konstanten kreisbogenförmigen Querschnitt hat, während der Teil (40) der besagten Wand (4), die unmittelbar darüber befindlich ist, an den besagten hohlen, nach innen gebogenen Querteil (41) berührend ist.

8. Presse nach Anspruch 6 oder Anspruch 7, **dadurch gekennzeichnet, daß** die Wand (61), vorgesehen, um mit der Weinlese in Berührung zu kommen, des Preßmittels (6) der Seite, von der die überhängende Portion (81) des Kuchenblocks (80) stürzen soll, gegenüber dem hohlen, nach innen gebogenen Querteil (41) der Wand (4) des anderen Preßmittels einen im wesentlichen vertikalen unteren Teil (62) aufweist.

9. Presse nach irgendeinem der vorgehenden Ansprüche, **dadurch gekennzeichnet, daß** die Wand (61) wenigstens des einen (6) von den Preßmitteln durchlöchert ist, um den Abfluß des Mostes bei einem Auspreßvorgang zu erlauben.
